# EUROPÄISCHE PATENTSCHRIFT

(11) **EP 3 877 751 B1**
(45) Veröffentlichungstag und Bekanntmachung des Hinweises auf die Patenterteilung: **23.08.2023**
(21) Anmeldenummer: 19787222.9
(22) Anmeldetag: 11.10.2019
(51) Int. Cl.: G01N 21/47, F01N 11/00, G01N 15/02, G01N 15/14, G01N 21/71, G01N 15/00, G01N 15/06

(54) **PARTIKELSENSOR ZUR DETEKTION VON PARTIKELN ODER AEROSOL IN EINEM STRÖMENDEN FLUID UNTER VERWENDUNG DES PRINZIPS DER LASERINDUZIERTEN INKANDESZENZ**
PARTICLE SENSOR FOR THE DETECTION OF PARTICLES OR AEROSOLS IN A STREAMING FLUID USING LASER INDUCED INCANDECENCE
CAPTEUR POUR LA DETECTION DE PARTICULE OU D'AEROSOLS DANS UN FLUIDE COULANT UTILISANT L'INCANDESCANCE INDUITE PAR LASER

(30) Priorität: 06.11.2018 DE 102018218912
(43) Veröffentlichungstag der Anmeldung: 15.09.2021
(73) Patentinhaber: Robert Bosch GmbH, 70442 Stuttgart (DE)
(72) Erfinder: BUCHHOLZ, Martin, 74321 Bietigheim-Bissingen (DE); RUSANOV, Radoslav, 70499 Stuttgart (DE); PURKL, Fabian, 71277 Rutesheim (DE); GEDEON, Panagiotis, 71701 Schwieberdingen (DE); BAARS, Enno, 71229 Leonberg (DE)
(86) Internationale Anmeldenummer: PCT/EP2019/077655
(87) Internationale Veröffentlichungsnummer: WO 2020/094333

(56) Entgegenhaltungen:
- EP-A2- 0 959 329
- DE-A1-102018 220 154
- US-A1- 2002 097 397
- US-B2- 7 084 963
- HUBER FRANZ J T ET AL: "A mobile system for a comprehensive online-characterization of nanoparticle aggregates based on wide-angle light scattering and laser-induced incandescence", REVIEW OF SCIENTIFIC INSTRUMENTS, AIP, MELVILLE, NY, US, Bd. 87, Nr. 5, 3. Mai 2016 (2016-05-03), XP012207403, ISSN: 0034-6748, DOI: 10.1063/1.4948288 [gefunden am 1901-01-01]

## Beschreibung

### Stand der Technik

Die Erfindung betrifft einen Partikelsensor zur Detektion von Partikeln oder Aerosol in einem strömenden Fluid unter Verwendung des Prinzips der laserinduzierten Inkandeszenz.

Das Prinzip der laserinduzierten Inkandeszenz ("LII") ist zur Detektion von Nanopartikeln in einem Gas, beispielsweise in Luft, bereits seit längerem bekannt und wird z.B. auch für die Charakterisierung des Verbrennungsprozesses in "gläsernen" Motoren im Labor oder für die Abgas-Charakterisierung in Laborumgebungen intensiv angewandt. Dabei werden die Partikel, beispielsweise Rußpartikel, mit einem Nanosekunden-Puls eines Hochleistungslasers auf mehrere Tausend Grad Celsius erhitzt, so dass sie signifikant Wärme- bzw. Temperaturstrahlung emittieren. Diese thermisch induzierte Lichtemission der Partikel wird mit einem Lichtdetektor gemessen. Die Methode erlaubt die Detektion von sehr kleinen Partikeln mit einem Durchmesser bis hinunter zu einer Größe von wenigen 10 nm.

Anordnungen zur Detektion von Partikeln sind schon bekannt aus der US 7 084 963 B2, dem Artikel "A mobile system for a comprehensive onlinecharacterization of nanoparticle aggregates based on wide-angle light scattering and laser-induced incandescence", F Huber et al. in review of scientific Instruments, BD. 87, Nr. 5.3, vom 03. Mai 2016, der US 2002/097397 A1 und der EP 0 959 329 A2.

Offenbarung der Erfindung

Das der Erfindung zugrunde liegende Problem wird gelöst durch einen Partikelsensor mit den Merkmalen des Anspruchs 1. Vorteilhafte Weiterbildungen sind in Unteransprüchen angegeben.

Der erfindungsgemäße Partikelsensor dient zur Detektion von Partikeln oder Aerosol in einem Fluid, beispielsweise einem Abgas. Er arbeitet unter Verwendung des Prinzips der laserinduzierten Inkandeszenz. Dabei wird zunächst mit Laserlicht, welches von dem Lasermodul ausgeht und in dem Spot mit genügend hoher Intensität gebündelt ist, ein Partikel durch teilweise Absorption des Laserlichts auf mehrere tausend Grad erhitzt. Dieser heiße Partikel gibt nach dem Planck'schen Strahlungsgesetz eine charakteristische Temperaturstrahlung ab (Inkandeszenz bzw. Glühemission), welche als Messsignal dient und mit dem ersten Detektor empfangen wird. Das Spektrum dieses thermisch emittierten Lichts (Temperaturstrahlung) ist üblicherweise relativ breitbandig mit einem Maximum im roten Bereich (abhängig von der erreichten Temperatur des Partikels bei ca. 750 nm).

Zu diesem Zweck ist bei dem erfindungsgemäßen Partikelsensor ein im Strahlengang des Lasers angeordnetes optisches Element vorhanden, das dazu ausgebildet und eingerichtet ist, von dem Lasermodul ausgehendes Laserlicht in einen sehr kleinen Spot zu bündeln. Bei einem Fokusdurchmesser von z.B. 10 µm kann davon ausgegangen werden, dass zu einem gegebenen Zeitpunkt immer nur ein Partikel den Spot durchfliegt (intrinsische Einzelpartikel-Detektierbarkeit), wenn man eine Partikelkonzentration von 10¹³/m³ zu Grunde legt. Der erste Detektor ist im Partikelsensor so eingerichtet und angeordnet, dass er vom Spot ausgehende Temperaturstrahlung detektiert. Als Laserquelle können kostengünstige Halbleiterlaserdioden eingesetzt werden, was die Kosten für den Partikelsensor senkt. Die Detektion der Temperaturstrahlung kann z.B. mittels einer empfindlichen Fotodiode oder eines Multi-Pixel-Photon-Counters (MPPC) erfolgen.

Erfindungsgemäß weist der Partikelsensor einen zweiten Detektor auf, der dazu eingerichtet und angeordnet ist, dass er zurückgestreutes Laserlicht detektiert. Mit diesem zusätzlichen Detektor, welcher auf die Wellenlänge des zurückgestreuten Laserlichtes empfindlich ist, lässt sich der Weg des Laserlichtes durch das mindestens eine optische Element bis zum Spot und die Rückstreuung des Laserlichtes zurück zum ersten Detektor kontrollieren. Dabei ist der zweite Detektor direkt neben und optisch parallel zum ersten Detektor angeordnet.

Damit kann man die Funktionalität des kompletten Lichtpfades überprüfen und eine Eigendiagnose des Partikelsensors realisieren. Hierzu ist nur ein einziger zweiter Detektor, beispielsweise eine Fotodiode, als zusätzliche Komponente notwendig, so dass die Erfindung sehr kostengünstig realisiert werden kann.

Dem liegt die Erkenntnis zugrunde, dass es ein generelles Problem eines auf der laserinduzierten Inkandeszenz basierenden Partikelsensors ist, eine eindeutige Eigendiagnose der Lichtpfade alleine mithilfe der für die eigentliche Sensorfunktion eingebauten Elemente (insbesondere Laser und erster Detektor) zu realisieren. So kann dann, wenn der erste Detektor für die Temperaturstrahlung ein (z.B. konstantes) Signal misst, nicht klar zugeordnet werden, ob dieses durch zurückgestreutes Laserlicht, durch das Laserlicht verursachte Fluoreszenz, durch thermische Strahlung aus dem Fluid oder durch erhöhtes Rauschen im ersten Detektor verursacht wird.

Durch den Einsatz des zweiten für das Laserlicht empfindlichen Detektors kann das zurückgestreute Laserlicht, welches vom Laser zum Sensorkopf und teilweise gestreut zurück zum ersten und somit auch zum zweiten Detektor gekommen ist, detektiert und quantifiziert werden. Damit lässt sich die Funktion des Lasers und der optische Pfad zum Spot und zurück zum ersten und zweiten Detektor prüfen, ggf. sogar quantitativ. Mit dem erfindungsgemäßen Partikelsensor werden somit die bisher vorhandenen Probleme, nämlich eine schwierige Selbstdiagnose bezüglich der Laserlichtleistung sowie eine schwierige Selbstdiagnose bezüglich der Funktion des optischen Pfades, gelöst. Bei einer Weiterbildung der Erfindung ist vorgesehen, dass der Partikelsensor optische Komponenten aufweist, die sowohl einerseits für die Leitung des Laserlichts vom Lasermodul zum Spot als auch andererseits für die Leitung der Temperaturstrahlung zum ersten Detektor und des zurückgestreuten Laserlichts zum zweiten Detektor verwendet werden. Hierdurch baut der Partikelsensor besonders kompakt.

Bei einer Weiterbildung der Erfindung ist vorgesehen, dass vor dem ersten Detektor ein erster Filter angeordnet ist, der wenigstens in etwa einen Wellenlängenbereich ausfiltert, in welchem der Laser emittiert, und vorzugsweise dass vor dem zweiten Detektor ein zweiter Filter angeordnet ist, der wenigstens in etwa den Wellenlängenbereich der Temperaturstrahlung ausfiltert. Auf diese Weise gelangen zu dem jeweiligen Detektor im Wesentlichen nur jene Strahlungsarten, die der Detektor detektieren soll.

Bei einer Weiterbildung der Erfindung ist vorgesehen, dass der Partikelsensor für die Leitung des Laserlichts vom Laser zum Spot und/oder der thermischen Strahlung vom Spot zum ersten Detektor und/oder des zurückgestreuten Laserlichts optische Komponenten, insbesondere Linsen und Spiegel, umfasst. Derartige optische Komponenten sind vergleichsweise preiswert und robust.

Bei einer Weiterbildung der Erfindung ist vorgesehen, dass der Partikelsensor für die Leitung des Laserlichts vom Laser zum Spot und/oder der thermischen Strahlung vom Spot zum ersten Detektor und/oder des zurückgestreuten Laserlichts mindestens einen Lichtwellenleiter umfasst. Hierdurch werden die Freiheitsgrade bei der Konstruktion des Partikelsensors erweitert. Es versteht sich, dass zusätzlich zu dem Lichtwellenleiter auch entsprechende einkoppelnde und auskoppelnde optische Elemente vorgesehen sein können.

Bei einer Weiterbildung der Erfindung ist vorgesehen, dass der Lasermodul einen fokussierten CW-Laser umfasst und dass das Laserlicht und der zu messende Gasstrom im Bereich des Spots wenigstens in etwa parallel verlaufen. In der hier vorgestellten Erfindung kann dafür beispielsweise ein kontinuierlich betriebener (CW)-Laser bei kleineren Leistungen (~50-500mW, teilweise bis 5000mW) verwendet werden, welcher mit entsprechenden optischen Elementen (z.B. Linsen) auf einen sehr kleinen Bereich (Spot) fokussiert wird. Durch diese Fokusbildung wird es trotz des CW-Betriebs möglich, die Leistungsdichte genügend zu steigern, um die für die laserinduzierte Inkandeszenz notwendigen Partikel-Temperaturen zu erreichen.

Bei einer Weiterbildung der Erfindung ist vorgesehen, dass er als portables Gerät ausgebildet ist. Dies ist besonders bei Feldmessungen vorteilhaft.

Bei einer Weiterbildung der Erfindung ist vorgesehen, dass der Partikelsensor bei der Ermittlung einer Raumluftqualität oder für die Detektion von Partikeln, insbesondere Rußpartikeln, in einem Abgasstrom einer Verbrennungsanlage oder einer Brennkraftmaschine verwendet wird. On-Board Diagnostik ("OBD") für den Zustand eines Dieselpartikelfilters einer Diesel-Brennkraftmaschine bzw. den Zustand eines Benzinpartikelfilters einer Benzin-Brennkraftmaschine, insbesondere in einem Kraftfahrzeug, wird durch die Abgasgesetzgebung bedingt zunehmend eingesetzt oder eingeplant. Hier hat daher der erfindungsgemäße Partikelsensor besonders große Vorteile. Der Sensor erlaubt sowohl eine Messung der Anzahlkonzentration (Partikel/m³ oder Partikel/mi) als auch der Massenkonzentration (mg/m³ bzw. mg/mi) der Rußpartikel im Abgas von Diesel- und Benzinfahrzeugen. Mit inbegriffen ist hierbei explizit die Fähigkeit zur Einzelpartikeldetektion in einem Prüfvolumen, so dass auch die Partikelgröße aus den Messdaten bestimmt werden kann. Der Sensor kann als OBD-Überwachung des Zustandes eines Partikelfilters eingesetzt werden. Er besitzt eine kurze Ansprechzeit und ist quasi sofort nach Aktivierung einsatzbereit. Gerade in Benzinfahrzeugen ist eine Partikelzahl-Messfähigkeit sowie die sofortige Einsatzbereitschaft des Partikelsensors unmittelbar nach dem Start des Fahrzeugs sehr wichtig, da ein Großteil der bei Benzinfahrzeugen typischerweise sehr feinen Partikel (wenig Masse, hohe Anzahl) während des Kaltstarts entsteht.

Bei einer Weiterbildung der Erfindung ist vorgesehen, dass der Partikelsensor eine Auswerteeinheit aufweist, welche dazu programmiert ist, auf der Basis der Signale des ersten Detektors und des zweiten Detektors eine Eigendiagnose der Lichtpfade des Partikelsensors durchzuführen. Es wird somit ein intelligenter Partikelsensor geschaffen, der als eigenständige Einheit sich selbst diagnostiziert und daher besonders vielfältig einsetzbar ist. Die Auswerteeinheit kann dann, wenn eine Fehlfunktion des Partikelsensors festgestellt wird, ein entsprechendes Signal ausgeben, welches dazu führt, dass ein Benutzer eines Kraftfahrzeugs von der Fehlfunktion in Kenntnis gesetzt wird.

Nachfolgend werden Ausführungsformen der Erfindung unter Bezugnahme auf die Zeichnung erläutert. In der Zeichnung zeigen:
- Figur 1: eine auf der laserinduzierten Inkandeszenz basierendes Messprinzip, dass bei der Erfindung verwendet wird;
- Figur 2: einen prinzipiellen Aufbau eines erfindungsgemäßen Partikelsensors;
- Figur 3: ein Blockschaltbild zur Erläuterung des Aufbaus einer ersten Ausführungsform eines erfindungsgemäßen Partikelsensors;
- Figur 4: ein Blockschaltbild ähnlich zu Figur 3 einer zweiten Ausführungsform; und
- Figur 5: eine detailliertere Darstellung des Aufbaus eines erfindungsgemäßen Partikelsensors.

Funktionsäquivalente Elemente und Bereiche tragen in der nachfolgenden Beschreibung die gleichen Bezugszeichen.

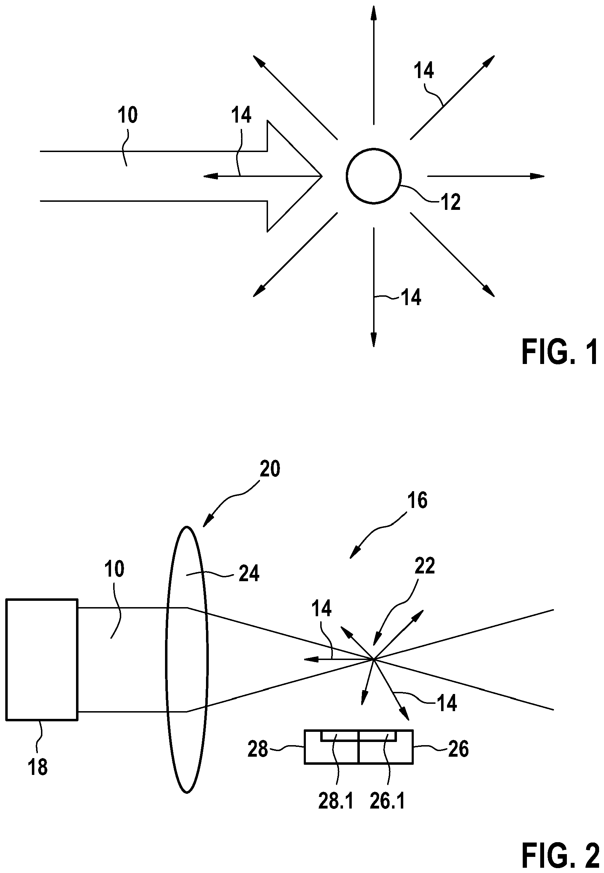

Figur 1 veranschaulicht das auf der laserinduzierten Inkandeszenz (LII) basierende Messprinzip. Laserlicht 10 hoher Intensität trifft auf einen Partikel 12, beispielsweise einen Rußpartikel im Abgasstrom einer Brennkraftmaschine (nicht dargestellt). Die Intensität des Laserlichts 10 ist so hoch, dass die vom Partikel 12 absorbierte Energie des Laserlichtes 10 den Partikel 12 auf mehrere Tausend Grad Celsius erhitzt. Als Folge der Erhitzung emittiert der Partikel 12 spontan und im Wesentlichen ohne Vorzugsrichtung signifikant Strahlung 14 in Form von Temperaturstrahlung, auch als LII-Licht bezeichnet. Ein Teil der in Form von Temperaturstrahlung emittierten Strahlung 14 wird daher auch entgegengesetzt zur Richtung des einfallenden Laserlichtes 10 emittiert.

Figur 2 zeigt schematisch einen prinzipiellen Aufbau eines Ausführungsbeispiels eines erfindungsgemäßen Partikelsensors 16. Der Partikelsensor 16 weist hier ein CW-Lasermodul 18 (CW = continuous wave, also "Dauerstrich") auf, dessen bevorzugt paralleles Laserlicht 10 mit wenigstens einem im Strahlengang des CW-Lasermoduls 18 angeordneten optischen Element 20 auf einen sehr kleinen Spot 22 fokussiert wird. Das optische Element 20 ist bevorzugt eine Linse 24. Nur im Volumen des Spots 22 erreicht die Intensität des Laserlichts 10 die für laserinduzierte Inkandeszenz notwendigen hohen Werte. Die Erfindung ist aber nicht auf die Verwendung eines CW-Lasers beschränkt. Es ist auch denkbar, gepulst betriebene Laser zu verwenden.

Die Abmessungen des Spots 22 liegen im Bereich einiger µm, insbesondere im Bereich von höchstens 200 µm, sodass den Spot 22 durchquerende Partikel 12 zur Emission auswertbarer Strahlungsleistungen angeregt werden, sei es durch laserinduzierte Inkandeszenz oder durch chemische Reaktionen (insbesondere Oxidation). Als Folge kann davon ausgegangen werden, dass sich stets höchstens ein Partikel 12 in dem Spot 22 befindet und dass ein momentanes Messsignal des Partikelsensors 16 nur von diesem höchstens einen Partikel 12 stammt. Das Messsignal wird von dem ersten Detektor 26 erzeugt, der im Partikelsensor 16 so angeordnet ist, dass er vom den Spot 22 durchfliegenden Partikel 12 ausgehende Strahlung 14, insbesondere Temperaturstrahlung detektiert. Der erste Detektor 26 weist dazu bevorzugt wenigstens eine Fotodiode 26.1 auf, welche die Temperaturstrahlung erfasst und eine Quantifizierung (Intensität als Funktion der Zeit) ermöglicht. Damit wird eine Einzelpartikelmessung möglich, welche die Extraktion von Informationen über den Partikel 12 wie Größe und Geschwindigkeit ermöglicht. Als Fotodiode 26.1 kommt beispielsweise ein kostengünstiger SiPM (silicon photomultiplier) oder eine SPAD-Diode (single-photon avalanche diode) infrage. Als Folge kann bereits ein von einem besonders kleinen Partikel erzeugtes und daher extrem kleines Lichtsignal, das beispielsweise von wenigen 10 Photonen gebildet wird, detektiert werden. Damit sinken die Abmessungen von Partikeln, die gerade noch nachweisbar sind, auf eine untere Nachweisgrenze von 10 bis 100 nm ab.

Mit dem Signal des ersten Detektors 26 lässt sich die Abgasgeschwindigkeit bestimmen, und die Berechnung eines Partikelgrößenspektrums wird möglich. Die erste Größe ist für die Berechnung der Anzahlkonzentration der Partikel 12 wichtig. In Kombination mit der zweiten Größe kann auch die Massenkonzentration berechnet werden. Dies stellt einen klaren Vorteil gegenüber anderen Messmethoden für die Partikelmessung dar.

Es ist durchaus möglich, dass der Laser des Lasermoduls 18 moduliert bzw. an- und ausgeschaltet wird (duty cycle < 100%). Bevorzugt bleibt jedoch, dass der Laser des Lasermoduls 18 ein CW-Laser ist. Dies ermöglicht den Einsatz von kostengünstigen Halbleiter-Laser-Elementen (Laser-Dioden), was den kompletten Partikelsensor 16 verbilligt und die Ansteuerung des Lasermoduls 18 und die Auswertung des Messsignals stark vereinfacht. Die Verwendung gepulster Laser ist aber nicht ausgeschlossen.

Direkt neben und optisch parallel zu dem ersten Detektor 26 ist ein zweiter Detektor 28 angeordnet, der eine Fotodiode 28.1 umfasst. Der zweite Detektor 28 ist empfindlich auf das Laserlicht 10, so dass mit diesem zweiten Detektor 28 zurückgestreutes Laserlicht erfasst werden kann. Der zweiten Detektor 28 gestattet es, dass zurückgestreute Laserlicht nicht nur zu erfassen, sondern es auch zu quantifizieren, wodurch die Funktion des Lasermoduls 18 und der optische Pfad vom Lasermodul 18 zum Spot 22 und zum ersten Detektor 26 geprüft werden kann, und zwar sogar auch in quantifizierbarem Maße.

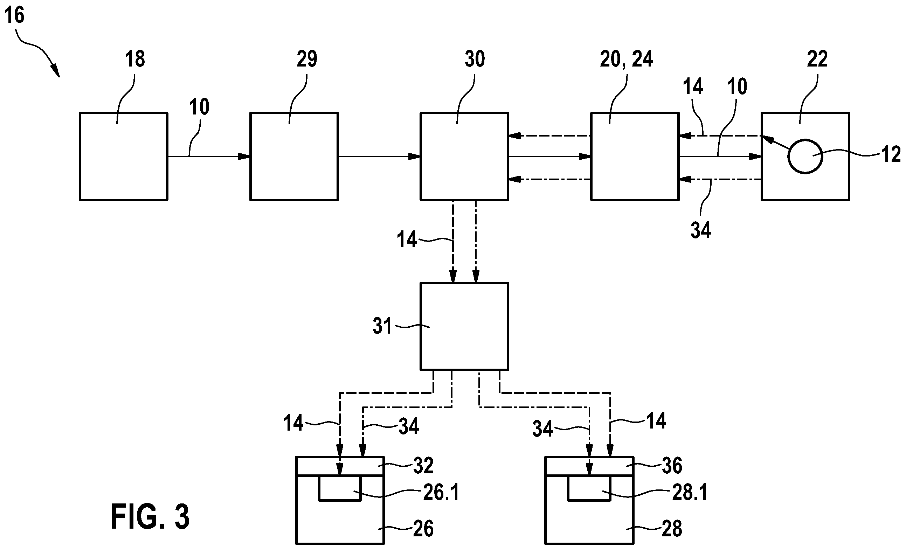

Figur 3 zeigt ein Blockschaltbild einer ersten Ausführungsform des Partikelsensors 16. Man erkennt zunächst den Lasermodul 18, der das Laserlicht 10 emittiert. Das Laserlicht 10 wird durch eine Linse 29 zunächst zu einem parallelen Strahl geformt, der durch einen Strahlteiler in Form eines dichroitischen Spiegels 30 hindurchtritt. Von dort gelangt er zu der Linse 24 und weiter in fokussierter Form zum Spot 22.

Temperaturstrahlung 14 (gestrichelte Pfeile) eines im Spot 22 durch das Laserlicht 10 angeregten Partikels 12 gelangt wiederum durch die Linse 24 zurück zum dichroitischen Spiegel 30, wo sie um 90° abgelenkt wird, durch eine Fokussierlinse 31 hindurchtritt und durch einen Filter 32 zur Fotodiode 26.1 des ersten Detektors 26 gelangt. Der Filter 32 ist so ausgebildet, dass er die Wellenlängen des Laserlichts 10 ausfiltert. Durch den Filter 32 wird der störende Background für die von Partikeln 12 z.B. in Form von Temperaturstrahlung emittierten Impulse von Temperaturstrahlung 14 reduziert. Das den Filter 32 aufweisende Ausführungsbeispiel nutzt spezifisch die schmale Bandbreite von Laserquellen (z.B. Laserdioden) aus, indem genau diese schmale Bandbreite vor dem ersten Detektor 26 ausgefiltert wird. Denkbar ist auch die Verwendung eines einfachen Kantenfilters. Das Signal-to-Noise-Ratio verbessert sich dadurch sehr stark.

Zu der Fotodiode 26.1 des ersten Detektors 26 gelangt gleichwohl nicht nur Temperaturstrahlung 14, sondern auch zurückgestreutes Laserlicht 34 (strichpunktierte Pfeile). Dies hängt damit zusammen, dass der Filter 32 immer auch eine kleine Menge an diesem zurückgestreuten Laserlicht 34 durchlässt. Möglich ist aber auch, dass Strahlung aufgrund von durch das Laserlicht 10 verursachter Fluoreszenz oder thermische Strahlung beispielsweise aus dem Abgas der Brennkraftmaschine zu der Fotodiode 26.1 des ersten Detektors 26 gelangt. Auch kann das Signal des ersten Detektors 26 ein erhöhtes Rauschen aufweisen.

Um die Funktion des Lasermoduls 18 und des optischen Pfads zwischen dem Lasermodul 18 bis zum Spot 22 und vom Spot 22 zum ersten Detektor 26 prüfen zu können, dient der zweite Detektor 28. Vom Bereich um den Spot 22 und/oder der Linse 24 und/oder dem dichroitischen Spiegel 30 gestreutes Laserlicht 34 (strichpunktierte Pfeile in Figur 3) gelangt nämlich über den selben optischen Pfad, einschließlich der Linse 31, zum ersten Detektor 26. Auch wenn das beispielsweise im Bereich um den Spot 22 gestreute Laserlicht am dichroitischen Spiegel 30 weitestgehend transmittiert wird, wird doch ein Bruchteil des Streulichts (z.B. 0,1%) um 90° in Richtung der Detektoren 26 und 28 abgelenkt. Bei Verwendung eines hochempfindlichen Detektors 28 (z.B. einer SPAD-Diode) reicht auch dieser Bruchteil des gestreuten Laserlichts für die Diagnosefunktion aus. Dieses gestreute Laserlicht 34 gelangt aber über einen Filter 36 auch zu dem zweiten Detektor 28 und zu dessen Fotodiode 28.1. Der Filter 36 ist so ausgebildet, dass er die Wellenlängen der Temperaturstrahlung 14 ausfiltert. Auf diese Weise gelangt zu der Fotodiode 28.1 im Wesentlichen nur noch das gestreute Laserlicht 34.

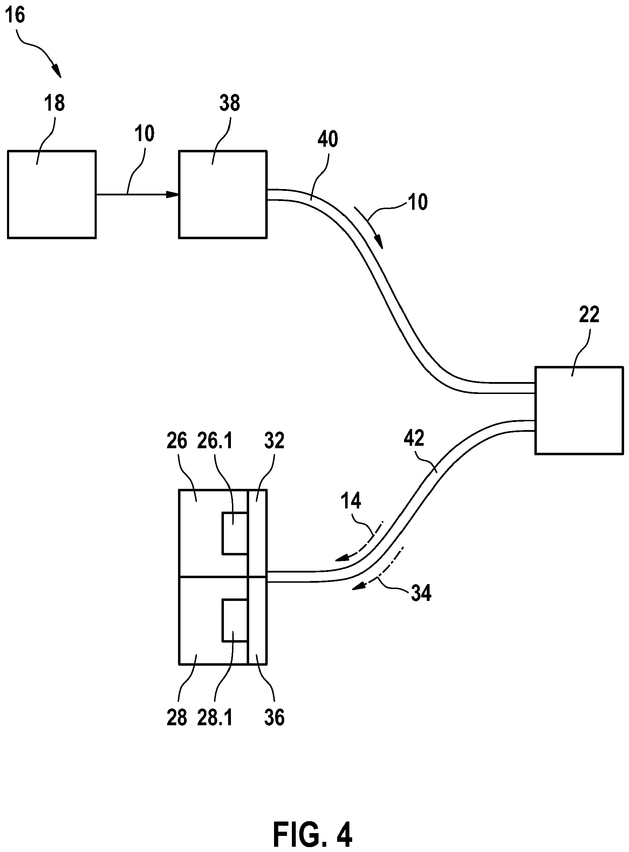

Eine alternative Variante zeigt die Figur 4: Hier wird das Laserlicht 10 über eine Einkoppeloptik 38 in einen Lichtwellenleiter 40 eingekoppelt und durch diesen zum Spot 22 geleitet. Die von dort emittierte Temperaturstrahlung 14 und das von dort teilweise zurückgestreute Laserlicht 34 werden beide durch einen weiteren Lichtwellenleiter 42 zu dem ersten Detektor 26 und zu dem zweiten Detektor 28 zurückgeleitet. Als Lichtwellenleiter 40 und 42 kommen insbesondere Glasfasern infrage.

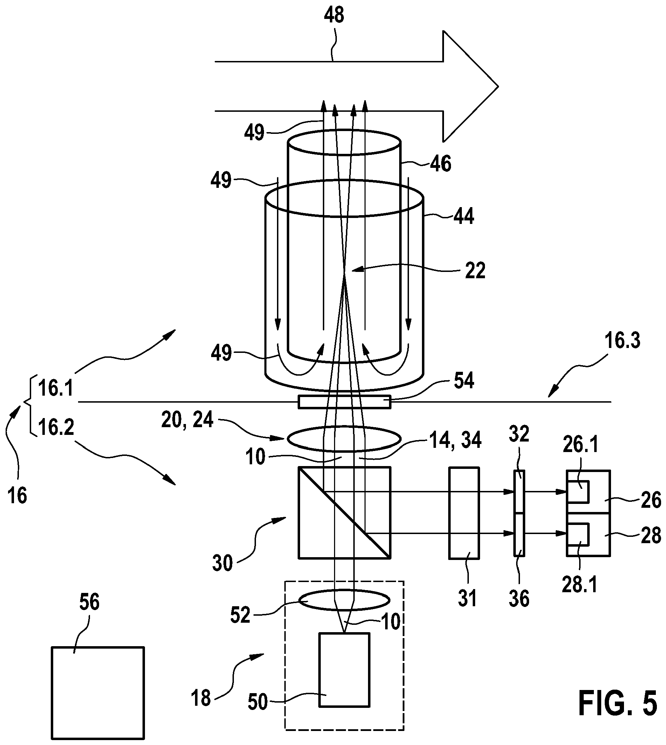

Figur 5 zeigt ein vorteilhaftes Ausführungsbeispiel eines erfindungsgemäßen Partikelsensors 16, der sich für den Einsatz als Rußpartikelsensor im Abgas eines Verbrennungsprozesses, beispielsweise in der Abgasanlage einer Brennkraftmaschine, eignet.

Der Partikelsensor 16 weist eine Anordnung aus einem äußeren Schutzrohr 44 und einem inneren Schutzrohr 46 auf. Die beiden Schutzrohre 44, 46 haben bevorzugt eine allgemeine Zylinderform oder Prismenform. Die Grundflächen der Zylinderformen sind bevorzugt kreisförmig, elliptisch oder vieleckig. Die Zylinder sind bevorzugt koaxial angeordnet, wobei die Achsen der Zylinder quer zur Strömung von Abgas 48 ausgerichtet sind. Das innere Schutzrohr 46 ragt in Richtung der Achsen über das äußere Schutzrohr 44 hinaus in das strömende Abgas 48 hinein. An dem vom strömenden Abgas 48 abgewandten Ende der beiden Schutzrohre 44, 46 ragt das äußere Schutzrohr 44 über das innere Schutzrohr 46 hinaus. Die lichte Weite des äußeren Schutzrohrs 44 ist bevorzugt so viel größer als der äußere Durchmesser des inneren Schutzrohrs 46, dass sich zwischen den beiden Schutzrohren 44, 46 ein erster Strömungsquerschnitt ergibt. Die lichte Weite des inneren Schutzrohrs 46 bildet einen zweiten Strömungsquerschnitt.

Diese Geometrie hat zur Folge, dass Abgas 48 über den ersten Strömungsquerschnitt in die Anordnung der beiden Schutzrohre 44, 46 eintritt, dann an dem vom Abgas 48 abgewandten Ende der Schutzrohre 44, 46 seine Richtung ändert, in das innere Schutzrohr 46 eintritt und aus diesem vom vorbeiströmenden Abgas 48 herausgesaugt wird (Pfeile mit dem Bezugszeichen 49). Dabei ergibt sich im inneren Schutzrohr 46 eine laminare Strömung. Diese Anordnung von Schutzrohren 44, 46 wird mit dem Rußpartikelsensor 16 quer zur Abgasströmung an, bzw. in einem Abgasrohr (nicht gezeichnet) befestigt.

Der Rußpartikelsensor 16 weist darüber hinaus das Lasermodul 18 auf, das bevorzugt, wie vorliegend dargestellt, paralleles Laserlicht 10 erzeugt. Im Strahlengang des parallelen Laserlichtes 10 befindet sich der Strahlteiler in Form des bereits oben erwähnten dichroitischen Spiegels 30. Ein den Strahlteiler 30 ohne Umlenkung durchlaufender Teil des Laserlichtes 10 wird durch das optische Element 20 zu dem sehr kleinen Spot 22 im Inneren des inneren Schutzrohrs 46 fokussiert. In diesem Spot 22 ist die Lichtintensität hoch genug, um die mit dem Abgas 48 transportierten Partikel 12 auf mehrere Tausend Grad Celsius zu erhitzen, so dass die erhitzten Partikel 12 signifikant Strahlung 14 in Form von Temperaturstrahlung emittieren. Die Strahlung 14 liegt zum Beispiel im nah-infraroten und sichtbaren Spektralbereich, ohne dass die Erfindung auf Strahlung 14 aus diesem Spektralbereich beschränkt ist.

Ein Teil dieser ungerichtet in Form von Temperaturstrahlung emittierten Strahlung 14, beziehungsweise dieses LII-Lichtes, wird von dem optischen Element 20 erfasst und über den Strahlteiler 30 abgelenkt und über die Linse 31 auf den ersten Detektor 26 gerichtet. Dieser Aufbau hat den besonders wichtigen Vorteil, dass nur ein optischer Zugang zum Abgas 48 benötigt wird, da die selbe Optik, insbesondere das selbe optische Element 20 für die Erzeugung des Spots 22 und für das Erfassen der vom Partikel 12 ausgehenden Temperaturstrahlung 14 benutzt wird. Das Abgas 48 ist ein Beispiel eines Messgases. Das Messgas kann auch ein anderes Gas oder Gasgemisch sein, zum Beispiel Raumluft.

Beim Gegenstand der Figur 5 weist das Lasermodul 18 eine Laserdiode 50 und eine Linse 52 auf, die das von der Laserdiode 50 ausgehende Laserlicht 10 parallel ausrichtet. Der Einsatz der Laserdiode 50 stellt eine besonders kostengünstige und einfach handhabbare Möglichkeit der Erzeugung von Laserlicht 10 dar. Das parallele Laserlicht 10 wird durch das optische Element 20 zum Spot 22 fokussiert.

Der optische Partikelsensor 16 weist bevorzugt einen dem Abgas ausgesetzten ersten Teil 16.1 und einen dem Abgas nicht ausgesetzten zweiten Teil 16.2 auf, der die optischen Komponenten des Partikelsensors 16 enthält. Beide Teile sind durch eine Trennwand 16.3 getrennt, die zwischen den Schutzrohren 44, 46 und den optischen Elementen des Partikelsensors verläuft. Die Wand 16.3 dient der Isolation der empfindlichen optischen Elemente von dem heißen, chemisch aggressiven und "schmutzigen" Abgas 48. In der Trennwand 16.3 ist im Strahlengang des Laserlichtes 10 ein Schutzfenster 54 angebracht, durch das hindurch das Laserlicht 10 in das Abgas 48 einfällt und über das vom Spot 22 ausgehende Temperaturstrahlung 14 auf das optische Element 20 und von da aus über den Strahlteiler 30 und den Filter 32 auf den ersten Detektor 26 einfallen kann. In gleicher Weise kann durch das Schutzfenster 54 das zurückgestreute Laserlicht 34 zu einem gewissen Anteil zum optischen Element 20, dem dichroitischen Spiegel 30, die Fokussierlinse 31 und den Filter 36 gelangen und auf den zweiten Detektor 28 einfallen.

Der optische Partikelsensor 16 kann ferner eine Auswerteeinheit 56 aufweisen, welche dazu programmiert ist, auf der Basis der Signale des ersten Detektors 26 und des zweiten Detektors 28 eine Eigendiagnose der Lichtpfade oder zumindest eines Teils der Lichtpfade des Partikelsensors 16 durchzuführen.

Es ist auch denkbar, den Spot 22 mit anderen als den hier lediglich als Ausführungsbeispiel angegebenen Linsenkombinationen zu erzeugen. Außerdem kann der Partikelsensor 16 auch mit anderen Laserlichtquellen als den hier für Ausführungsbeispiele angegebenen Laserdioden 50 verwirklicht werden.

## Patentansprüche

1. Partikelsensor (16) zur Detektion von Partikeln (12) oder Aerosol in einem strömenden Fluid unter Verwendung des Prinzips der laserinduzierten Inkandeszenz, mit einem Laser (18) und mit einem zur Detektion von Temperaturstrahlung (14) eingerichteten ersten Detektor (26), wobei der Partikelsensor (16) mindestens ein im Strahlengang des Lasers (18) angeordnetes optisches Element (20) aufweist, das dazu angeordnet und eingerichtet ist, von dem Laser (18) ausgehendes Laserlicht (10) in einen Spot (22) zu bündeln, und dass der erste Detektor (26) so eingerichtet und angeordnet ist, dass er vom Spot (22) ausgehende Temperaturstrahlung (14) detektiert, und dass der Partikelsensor (16) einen zweiten Detektor (28) aufweist, der dazu eingerichtet und angeordnet ist, dass er zurückgestreutes Laserlicht (34) detektiert, **dadurch gekennzeichnet, dass** der zweite Detektor (28) direkt neben und optisch parallel zum ersten Detektor (26) angeordnet ist.

2. Partikelsensor (16) nach Anspruch 1, **dadurch gekennzeichnet, dass** er optische Komponenten (20, 30) aufweist, die sowohl für die Leitung des Laserlichts (10) vom Laser (18) zum Spot (22) als auch für die Leitung der Temperaturstrahlung (14) zum ersten Detektor (26) und des zurückgestreuten Laserlichts (34) zum zweiten Detektor (28) verwendet werden.

3. Partikelsensor (16) nach wenigstens einem der vorhergehenden Ansprüche, **dadurch gekennzeichnet, dass** vor dem ersten Detektor (26) ein erster Filter (32) angeordnet ist, der wenigstens in etwa jenen Wellenlängenbereich ausfiltert, in welchem der Laser (18) emittiert, und vorzugsweise dass vor dem zweiten Detektor (28) ein zweiter Filter (36) angeordnet ist, der wenigstens in etwa den Wellenlängenbereich der Temperaturstrahlung (14) ausfiltert.

4. Partikelsensor (16) nach wenigstens einem der vorhergehenden Ansprüche, **dadurch gekennzeichnet, dass** er für die Leitung des Laserlichts (10) vom Laser (18) zum Spot (22) und/oder der Temperaturstrahlung (14) vom Spot (22) zum ersten Detektor (26) und/oder des zurückgestreuten Laserlichts (34) optische Komponenten, insbesondere Linsen (20) und Spiegel (30), umfasst.

5. Partikelsensor (16) nach wenigstens einem der vorhergehenden Ansprüche, **dadurch gekennzeichnet, dass** er für die Leitung des Laserlichts (10) vom Laser (18) zum Spot (22) und/oder der Temperaturstrahlung (14) vom Spot (22) zum ersten Detektor (26) und/oder des zurückgestreuten Laserlichts (34) mindestens einen Lichtwellenleiter (40,42) umfasst.

6. Partikelsensor (16) nach wenigstens einem der vorhergehenden Ansprüche, **dadurch gekennzeichnet, dass** der Laser (18) einen fokussierter CW-Laser umfasst und dass das Laserlicht (10) und der zu messende Gasstrom im Bereich des Spots (22) parallel verlaufen.

7. Partikelsensor (16) nach wenigstens einem der vorhergehenden Ansprüche, **dadurch gekennzeichnet, dass** er als portables Gerät ausgebildet ist.

8. Partikelsensor (16) nach wenigstens einem der vorhergehenden Ansprüche, **dadurch gekennzeichnet, dass** bei der Ermittlung einer Raumluftqualität oder für die Detektion von Partikeln, insbesondere Rußpartikeln, in einem Abgasstrom (48) einer Verbrennungsanlage oder einer Brennkraftmaschine verwendet wird.

9. Partikelsensor (16) nach wenigstens einem der vorhergehenden Ansprüche, **dadurch gekennzeichnet, dass** er eine Auswerteeinheit aufweist, welche dazu programmiert ist, auf der Basis der Signale des ersten Detektors (26) und des zweiten Detektors (28) eine Eigendiagnose der Lichtpfade des Partikelsensors (16) durchzuführen.

## Claims

1. Particle sensor (16) for detecting particles (12) or aerosols in a streaming fluid using the principle of laser-induced incandescence, having a laser (18) and having a first detector (26) configured to detect temperature radiation (14), wherein the particle sensor (16) comprises at least one optical element (20) which is arranged in the beam path of the laser (18) and which is arranged and configured to focus laser light (10) emanating from the laser (18) into a spot (22), and wherein the first detector (26) is configured and arranged so that it detects temperature radiation (14) emanating from the spot (22) and wherein the particle sensor (16) has second detector (28) which is configured and arranged to detect back-scattered laser light (34), **characterized in that** the second detector (28) is arranged directly next to and optically parallel with the first detector (26).

2. Particle sensor (16) according to Claim 1, **characterized in that** it comprises optical components (20, 30) which are used both to guide the laser light (10) from the laser (18) to the spot (22) and to guide the temperature radiation (14) to the first detector (26) and the back-scattered laser light (34) to the second detector (28).

3. Particle sensor (16) according to at least one of the preceding claims, **characterized in that** a first filter (32) is arranged upstream of the first detector (26) and filters out at least approximately the wavelength range in which the laser (18) emits, and preferably **in that** a second filter (36) is arranged upstream of the second detector (28) and filters out at least approximately the wavelength range of the temperature radiation (14).

4. Particle sensor (16) according to at least one of the preceding claims, **characterized in that** it comprises optical components, in particular lenses (20) and mirrors (30), for guiding the laser light (10) from the laser (18) to the spot (22) and/or the temperature radiation (14) from the spot (22) to the first detector (26) and/or the back-scattered laser light (34).

5. Particle sensor (16) according to at least one of the preceding claims, **characterized in that** it comprises at least one optical waveguide (40, 42) for guiding the laser light (10) from the laser (18) to the spot (22) and/or the temperature radiation (14) from the spot (22) to the first detector (26) and/or the back-scattered laser light (34).

6. Particle sensor (16) according to at least one of the preceding claims, **characterized in that** the laser (18) comprises a focused CW laser and **in that** the laser light (10) and the gas flow to be measured run in parallel in the region of the spot (22).

7. Particle sensor (16) according to at least one of the preceding claims, **characterized in that** it is designed as a portable device.

8. Particle sensor (16) according to at least one of the preceding claims, **characterized in that** it is used when determining indoor air quality or for the detection of particles, in particular soot particles, in an exhaust gas flow (48) of an incinerator or an internal combustion engine.

9. Particle sensor (16) according to at least one of the preceding claims, **characterized in that** it comprises an evaluation unit which is programmed to carry out a self-diagnosis of the light paths of the particle sensor (16) on the basis of the signals from the first detector (26) and the second detector (28).

## Revendications

1. Capteur de particules (16) destiné à détecter des particules (12) ou un aérosol dans un fluide en écoulement à l'aide du principe de l'incandescence induite par laser, ledit capteur de particules comprenant un laser (18) et un premier détecteur (26) conçu pour détecter un rayonnement thermique (14), le capteur de particules (16) comportant au moins un élément optique (20) qui est disposé dans le trajet de faisceau du laser (18) et qui est disposé et conçu pour focaliser la lumière laser (10) émanant du laser (18) en un spot (22), et le premier détecteur (26) étant disposé et conçu de manière à détecter le rayonnement thermique (14) émanant du spot (22) et le capteur de particules (16) comportant un deuxième détecteur (28) qui est disposé et conçu pour détecter la lumière laser rétrodiffusée (34),
**caractérisé en ce que** le deuxième détecteur (28) est disposé directement à côté du premier détecteur (26) et optiquement parallèlement à celui-ci.

2. Capteur de particules (16) selon la revendication 1, **caractérisé en ce qu'**il comporte des composants optiques (20, 30) qui sont utilisés aussi bien pour diriger de la lumière laser (10) depuis le laser (18) jusqu'au spot (22) que pour diriger le rayonnement thermique (14) vers le premier détecteur (26) et la lumière laser rétrodiffusée (34) vers le deuxième détecteur (28).

3. Capteur de particules (16) selon l'une au moins des revendications précédentes, **caractérisé en ce qu'**un premier filtre (32) est disposé devant le premier détecteur (26) et exfiltre au moins approximativement toute plage de longueurs d'onde dans laquelle le laser (18) émet, et de préférence **en ce qu'**un deuxième filtre (36) est disposé devant le deuxième détecteur (28) et exfiltre au moins approximativement la plage de longueurs d'onde du rayonnement thermique (14).

4. Capteur de particules (16) selon l'une au moins des revendications précédentes, **caractérisé en ce qu'**il comprend des composants optiques, notamment des lentilles (20) et des miroirs (30) afin de diriger la lumière laser (10) du laser (18) vers le spot (22) et/ou le rayonnement thermique (14) du spot (22) vers le premier détecteur (26) et/ou la lumière laser rétrodiffusée (34).

5. Capteur de particules (16) selon l'une au moins des revendications précédentes, **caractérisé en ce qu'**il comprend au moins un guide d'ondes lumineuses (40, 42) afin de diriger la lumière laser (10) du laser (18) vers le spot (22) et/ou le rayonnement thermique (14) du spot (22) vers le premier détecteur (26) et/ou la lumière laser rétrodiffusée (34).

6. Capteur de particules (16) selon l'une au moins des revendications précédentes, **caractérisé en ce que** le laser (18) comprend un laser continu focalisé et **en ce que** la lumière laser (10) et le flux de gaz à mesurer sont parallèles dans la zone du spot (22).

7. Capteur de particules (16) selon l'une au moins des revendications précédentes, **caractérisé en ce qu'**il est conçu comme un appareil portable.

8. Capteur de particules (16) selon l'une au moins des revendications précédentes, **caractérisé en ce qu'**il est utilisé pour déterminer une qualité d'air ambiant ou pour détecter des particules, en particulier des particules de suie, dans un flux de gaz d'échappement (48) d'un incinérateur ou d'un moteur à combustion interne.

9. Capteur de particules (16) selon l'une au moins des revendications précédentes, **caractérisé en ce qu'**il comporte une unité d'évaluation qui est programmée pour effectuer un autodiagnostic des trajets lumineux du capteur de particules (16) sur la base des signaux du premier détecteur (26) et du deuxième détecteur (28).
